# EUROPÄISCHE PATENTANMELDUNG

(11) **EP 0 978 403 A2**
(43) Veröffentlichungstag der Anmeldung: **09.02.2000**
(21) Anmeldenummer: 99114590.5
(22) Anmeldetag: 26.07.1999
(51) Int. Cl.: B60J 7/057

(54) **Fahrzeugdach**

(30) Priorität: 01.08.1998 DE 19834825
(71) Anmelder: WEBASTO KAROSSERIESYSTEME GmbH, D-82131 Stockdorf (DE)
(72) Erfinder: Hahn, Ferdinand, 86911 Diessen (DE); Ganz, Thomas, 82131 Stockdorf (DE); Kraus, Thomas, 82131 Gauting (DE); Schulz, Horst, 82211 Herrsching (DE)
(74) Vertreter: Wiese, Gerhard

(57) **Zusammenfassung**

Bei einem Fahrzeugdach mit einer in einer festen Dachfläche (10) vorgesehen Dachöffnung (12), mindestens einem Verschlußelement (14) zum wahlweisen Verschließen oder wenigstens teilweisen Freigeben der Dachöffnung, einem elektrischen Verstellantrieb (18) zum Antreiben des Verschlußelements, einer Sensorik (24) zum Erfassen einer die Sicherheit der Fahrzeuginsassen beeinträchtigenden Situation und zum Erzeugen eines entsprechenden Gefahrensignals, sowie einer mit der Sensorik gekoppelten schnellwirkenden Schließvorrichtung (22), die das Verschlußelement bei Vorliegen eines Gefahrensignals aus dessen Offen- bzw. Teiloffenstellung zu einer Schließbewegung veranlaßt, weist die Schließvorrichtung Mittel zum Erzeugen einer elektrischen Spannung und zum Anlegen derselben an den elektrischen Verstellantrieb auf, welche die normale Speisespannung (*Nennspannung*) des Verstellantriebs um ein Mehrfaches übersteigt.

## Beschreibung

Die vorliegende Erfindung betrifft ein Fahrzeugdach mit einer in einer festen Dachfläche vorgesehenen Dachöffnung, mindestens einem Verschlußelement zum wahlweisen Verschließen oder wenigstens teilweisen Freigeben der Dachöffnung, einem elektrischen Verstellantrieb zum Antreiben des Verschlußelements, einer Sensorik zum Erfassen einer die Sicherheit der Fahrzeuginsassen beeinträchtigenden Situation und zum Erzeugen eines entsprechenden Gefahrensignals, sowie einer mit der Sensorik gekoppelten schnellwirkenden Schließvorrichtung, die das Verschlußelement bei Vorliegen eines Gefahrensignals aus dessen Offen- bzw. Teiloffenstellung zu einer Schließbewegung veranlaßt. Des weiteren betrifft die vorliegende Erfindung ein Verfahren zum zumindest teilweisen Verschließen einer in einer festen Dachfläche eines Fahrzeugs vorgesehenen Dachöffnung mittels eines elektrisch antreibbaren Verschlußelements.

Ein Fahrzeugdach der eingangs genannten Art ist aus DE 40 31 552 C2 bekannt. Hierbei ist die schnellwirkende Schließvorrichtung unabhängig von dem Verstellantrieb ausgeführt und weist als Kraftquelle zum Schließen des Verschlußelements einen Energiespeicher auf, bei dem es sich um einen mechanischen Energiespeicher, einen hydraulischen oder pneumatischen Energiespeicher oder um einen chemischen Energiespeicher beispielsweise in Form eines Treibsatzes handeln kann. Das Fahrzeugdach gemäß DE 40 31 552 C2, insbesondere in der einzigen dort im Detail veranschaulichten Ausführungsform, bei welchem als Energiespeicher eine spannbare Federanordnung vorgesehen ist, ist insofern nachteilig, als dessen Aufbau recht kompliziert ist und eine Vielzahl an Teilen erfordert. Da ferner die Spannfedern einer jeden Öffnungsbewegung des Verschlußelements entgegenwirken, muß zum Öffnen des Verschlußelements eine übermäßig große Kraft aufgebracht werden, wodurch, wenn das Verschlußelement elektrisch angetrieben werden soll, ein gegenüber üblichen Dachantriebsmotoren erheblich stärkerer Antriebsmotor vorgesehen werden muß oder gar eine Getriebeübersetzung erforderlich wird.

Der vorliegenden Erfindung liegt daher die Aufgabe zugrunde, ein Fahrzeugdach der eingangs genannten Art sowie ein Verfahren zum zumindest teilweisen Verschließen einer Fahrzeugdachöffnung zu schaffen, bei welchen in einer Gefahrensituation ein schneller Schließvorgang ausgelöst werden kann, ohne daß hierzu übermäßige bauliche Veränderungen am Dach selbst bzw. am Verstellantrieb erforderlich wären.

Diese Aufgabe wird bei einem Fahrzeugdach der eingangs genannten Art dadurch gelöst, daß die Schließvorrichtung Mittel zum Erzeugen einer elektrischen Spannung und zum Anlegen derselben an den elektrischen Verstellantrieb aufweist, welche die normale Speisespannung (*Nennspannung*) des Verstellantriebs um ein Mehrfaches übersteigt. Auf diese Weise läßt sich bei jeglichen elektrisch betätigbaren Fahrzeugdächern eine Notschließung in einfacher Weise bewerkstelligen, ohne daß hierfür aufwendige Komponenten wie beispielsweise die gemäß DE 40 31 552 C2 vorgesehenen Energiespeicher erforderlich wären. Mit der erfindungsgemäßen Lösung lassen sich auch bereits verfügbare Systeme ohne Umbau der Dachmechanik nachrüsten. Mittels Anlegen einer elektrischen Spannung an das Verschlußelement, welche die normale Speisespannung (*Nennspannung*) des elektrischen Verstellantriebs um ein Mehrfaches übersteigt, kann im Falle eines Unfalls das Verschlußelement so schnell geschlossen werden, daß sowohl das Hinausschleudern von Insassen durch die Dachöffnung als auch das Eindringen von Fremdkörpern durch dieselbe wirkungsvoll verhindert werden.

Weitere Ausgestaltungen der Erfindung ergeben sich aus den Unteransprüchen.

Insbesondere können die Mittel zum Erzeugen einer elektrischen Spannung einen mit der Fahrzeugbatterie verbundenen Aufwärts-DC/DC-Wandler umfassen. Mittels dieses Gleichstrom-Gleichstrom-Wandlers kann im Gefahrenfall die von der Fahrzeugbatterie abgegebene Spannung in eine Spannung umgesetzt werden, die ein Mehrfaches der normalen Speisespannung, d.h. der Nennspannung, des elektrischen, in der Regel als Gleichstrommotor ausgeführten Verstellantriebs ausmacht. Ein bevorzugter Spannungsbereich zum schnellen Verfahren des Verschlußelements im Gefahrenfall reicht von 100 bis 120 V.

Um im Gefahrenfall übermäßige Verluste beim Anlegen der hohen Spannung an den elektrischen Verstellantrieb über den Fahrzeugkabelbaum, insbesondere über ein Kabel mit kleinem Kabelquerschnitt, von vornherein auszuschließen, kann eine vom elektrischen Bordnetz des Fahrzeugs unabhängige Leitung vorgesehen sein, die einen Ausgang des Aufwärts-DC/DC-Wandlers mit einem Eingang des Verstellantriebs verbindet.

Eine weitere Möglichkeit, im Gefahrenfall für eine hohe Spannung zum schnellen Schließen des Verschlußelements zu sorgen, besteht darin, daß die Mittel zum Erzeugen einer elektrischen Spannung eine von der Fahrzeugbatterie unabhängige Spannungsquelle umfassen, die eine elektrische Spannung erzeugt, welche die normale Speisespannung des elektrischen Verstellantriebs um ein Mehrfaches übersteigt.

In weiterer Ausgestaltung der Erfindung kann das schnelle Schließen des Verschlußelements abgesehen von der eigentlichen Crasherfassung von mehreren weiteren Parametern beeinflußt werden. Hierfür können beispielsweise eine Sitzbelegungs-Erkennungseinrichtung, eine Gurtschloß-Erkennungseinrichtung, und/oder ein Einklemmschutz vorgesehen sein, die jeweils mit der Schließvorrichtung zusammenwirken, um in Abhängigkeit von Ausgangssignalen der genannten Einrichtungen die Schließbewegung des Verschlußelements zu stoppen oder gänzlich zu verhindern, beispielsweise wenn mittels einer oder mehreren der genannten Einrichtungen erkannt wird, daß sich im Falle eines Unfalls ein im Bereich der Dachöffnung sitzender Fahrgast schon soweit von der Sitzfläche abgehoben hat, daß die Gefahr besteht, daß dieser Fahrgast durch das sich schnell schließende Verschlußelement verletzt werden könnte. Ferner kann auch generell ein Stoppen der Schließbewegung in einer Zwischenposition vorgesehen sein, in der ein Einklemmen von Körperteilen nicht stattfindet, so beispielsweise etwa 200 mm vor der vollständigen Schließposition.

Das Verschlußelement, welches gemäß der vorliegenden Erfindung bei Erfassen einer die Sicherheit der Fahrzeuginsassen beeinträchtigenden Situation schnell geschlossen werden kann, kann beispielsweise als ein verschieblicher Himmel oder als Dachdeckel ausgeführt sein.

Um den Schutz für die Fahrzeuginsassen im Falle eines Unfalls weiter auszubauen, kann des weiteren ein Airbag vorgesehen sein, der im Gefahrenfall die Dachöffnung für den Moment der Schnellschließung verdeckt.

Nach der Erfindung wird die oben genannte Aufgabe des weiteren durch ein Verfahren zum zumindest teilweisen Verschließen einer in einer festen Dachfläche eines Fahrzeugs vorgesehenen Dachöffnung mittels eines elektrisch antreibbaren Verschlußelements gelöst, bei welchem mittels einer am Fahrzeug vorgesehenen Sensorik eine die Sicherheit der Fahrzeuginsassen beeinträchtigende Situation erfaßt wird; und eine elektrischen Spannung erzeugt und an das elektrisch antreibbare Verschlußelement angelegt wird, welche die normale Speisespannung (*Nennspannung*) des elektrischen Verstellantriebs zum Antreiben des Verschlußelements um ein Mehrfaches übersteigt. Weitere Ausgestaltungen des erfindungsgemäßen Verfahrens sind in den Ansprüchen 14 bis 19 geschildert

Bevorzugte Ausführungsbeispiele der Erfindung werden im folgenden unter Bezugnahme auf die beiliegenden Zeichnungen im Detail beschrieben. Es zeigen:
- FIG. 1: einen schematischen Teilschnitt durch ein mit einem Fahrzeugdach gemäß der vorliegenden Erfindung ausgestattetes Fahrzeug; und
- FIG. 2: einen schematischen Verschaltungsplan für ein Fahrzeugdach gemäß FIG. 1.

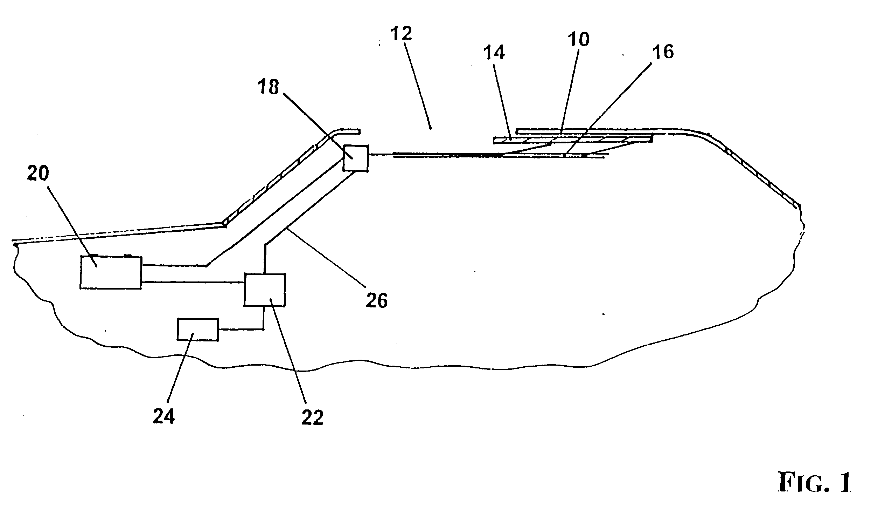

Bei dem in FIG. 1 schematisch dargestellten Fahrzeug ist in einer festen Dachfläche 10 eine Dachöffnung 12 vorgesehen, die mittels eines Verschlußelements 14 verschließbar ist. Bei dem in FIG. 1 gezeigten Ausführungsbeispiel ist das Verschlußelement 14 der entlang einer dachfesten Führung 16 hin- und herverschiebliche Deckel eines Schiebedaches. Das vorliegend geschilderte Prinzip läßt sich jedoch in gleicher Weise auf jegliche Arten von elektrisch verfahrbaren Fahrzeugdächern anwenden, wie beispielsweise Spoilerdächer, Schiebehebedächer, Lamellendächer und dergleichen.

Zum Verstellen des Verschlußelements 14 ist ein elektrischer Verstellantrieb 18 vorgesehen, der von der Bordbatterie 20 des Fahrzeugs gespeist wird. In FIG. 1 sind eine schnellwirkende Schließvorrichtung sowie eine mit der Schließvorrichtung gekoppelte Sensorik schematisch als Blöcke 22 bzw. 24 angedeutet. Bei der hier gezeigten Ausführungsform wird die Schließvorrichtung 22 von der Bordbatterie 20 gespeist und ist über eine Leitung 26 mit dem Verstellantrieb 18 verbunden.

Wie nachstehend näher erläutert werden wird, dient die Sensorik 24 zur Erfassung einer die Sicherheit der Fahrzeuginsassen beeinträchtigenden Situation und zum Erzeugen eines entsprechenden Gefahrensignals. Zu diesem Zweck kann die Sensorik 24 in an sich bekannter Weise beispielsweise einen auf übermäßige Beschleunigungen reagierenden Crashsensor, einen Radsensor oder dergleichen aufweisen. Im Gefahrenfall liefert die Sensorik 24 ein Signal an die Schließvorrichtung 22, die ihrerseits eine Schließbewegung des Verschlußelements 14 veranlaßt.

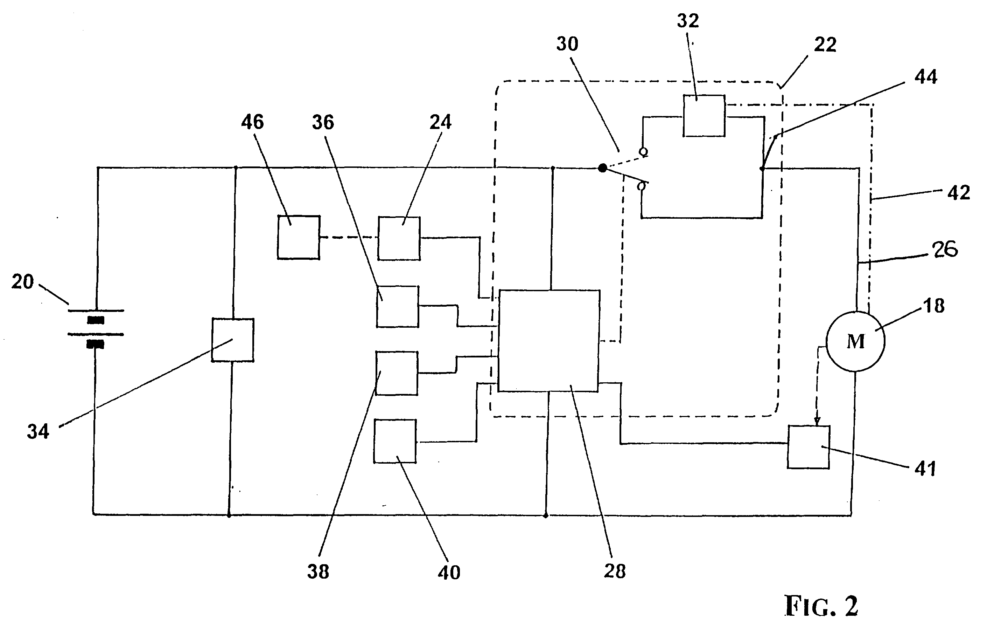

Bezugnehmend auf FIG. 2 wird eine mögliche Verschaltung des Fahrzeugdaches gemäß FIG. 1 näher erläutert. Der elektrische Verstellantrieb 18 zum Antreiben des in FIG. 2 nicht dargestellten Verschlußelements 14 ist über einen ebenfalls nicht dargestellten Betätigungsschalter mit der Bordbatterie 20 des Fahrzeugs verbunden, die üblicherweise eine Spannung von ca. 12 V liefert. Die Schließvorrichtung 22 ist in FIG. 2 in Form eines gestrichelten Blockes angedeutet, und sie weist eine Steuerschaltung 28, einen von der Steuerschaltung 28 betätigbaren Umschalter 30 sowie einen Aufwärts-DC/DC-Wandler 32 auf. Erfaßt die Sensorik 24, die wie oben erläutert beispielsweise einen Crashsensor aufweisen kann, eine die Sicherheit der Fahrzeuginsassen beeinträchtigende Situation, in welcher die vor Eintreten dieser Situation zumindest teilweise geöffnete Dachöffnung 12 (siehe FIG. 1) mittels des Verschlußelements 14 geschlossen werden soll, so liefert sie ein entsprechendes Gefahrensignal an die Steuerschaltung 28, die ihrerseits den Umschalter 30 aktiviert. Wird der Umschalter 30 aktiviert, so schaltet er von der in FIG. 2 dargestellten Normalstellung, in welcher der elektrische Verstellantrieb 18 mit der Bordbatterie 20 verbunden ist, in die in gestrichelten Linien dargestellte Gefahrenstellung um, in welcher der Aufwärts-DC/DC-Wandler 32 zwischen die Bordbatterie 20 und den elektrischen Verstellantrieb 18 geschaltet wird, so daß die von der Bordbatterie 20 abgegebene Spannung auf ein Mehrfaches der Nennspannung des elektrischen Verstellantriebs 18 umgewandelt wird, um so das Verschlußelement 14 erheblich schneller als im Normalbetrieb zu schließen. Andere im Fahrzeug vorgesehene elektrische Verbraucher, wie sie in FIG. 2 durch einen Block 34 angedeutet sind, werden hierbei von der von dem Wandler 32 erzeugten hohen Spannung nicht beeinträchtigt.

In FIG. 2 sind ferner weitere mit der Steuerschaltung 28 gekoppelte Erkennungseinrichtungen schematisch angedeutet, bei denen es sich beispielsweise um eine Sitzbelegungs-Erkennungseinrichtung 36, eine Gurtschloß-Erkennungseinrichtung 38, einen Einklemmschutz 40 oder andere Einrichtungen handeln kann, die Parameter überwachen, die für den Betrieb der erfindungsgemäßen Schnellschließeinrichtung von Bedeutung sein können. Als Beispiel für eine weitere Überwachungseinrichtung sei ein Positionssensor 41 genannt, der überwacht, ob sich das Verschlußelement ohnehin in seiner Schließstellung, bzw. in einer Position, die hinreichend nahe an der Schließstellung liegt, befindet, so daß sich ein Betrieb der hier beschriebenen Schnellschließeinrichtung erübrigt.

Wie bereits angedeutet, kann es sich bei dem Verschlußelement 14, welches im Gefahrenfall schnell geschlossen werden kann, beispielsweise um einen Dachdeckel oder um einen unterhalb der Dachöffnung verschiebbar angeordneten Himmel handeln.

Da die gesamte Schließvorrichtung 22 unabhängig von der Ausführung des elektrisch antreibbaren Verschlußelements ist, eignet sich das vorliegend beschriebene Konzept zum Nachrüsten bereits bestehender Systeme. Insbesondere sind bei einem solchen Nachrüsten keinerlei Änderungen am Dachaufbau erforderlich. Falls erwünscht kann jedoch eine vom elektrischen Bordnetz des Fahrzeugs unabhängige Leitung vorgesehen werden, die vorzugsweise einen größeren Kabelquerschnitt aufweist, um Verluste bei der Nutzung des 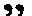 normalen" Fahrzeugkabelbaums zum Übertragen der relativ hohen Spannung zu dem Verschlußelement von vornherein auszuschließen. Eine derartige unabhängige Leitung ist in FIG. 2 in strichpunktierten Linien bei 42 angedeutet, wobei diese Leitung 42 dann das zwischen dem Wandler 32 und dem Knotenpunkt 44 vorgesehene Leitungsstück 26 ersetzen würde. Des weiteren zeigt FIG. 2 schematisch einen Airbag 46, der im Gefahrenfall für den Moment der Schnellschließung die Dachöffnung verdeckt, wobei die Auslösung dieses Airbags über die zum Auslösen eines schnellen Schließvorgangs genutzte Sensorik 24 erfolgen kann.

### Bezugszeichenliste

- 10: feste Dachfläche
- 12: Dachöffnung
- 14: Verschlußelement
- 16: dachfeste Führung
- 18: elektrischer Verstellantrieb
- 20: Bordbatterie
- 22: schnellwirkende Schließvorrichtung
- 24: Sensorik
- 26: Leitung zwischen 22 und 18
- 28: Steuerschaltung
- 30: Umschalter
- 32: Aufwärts-DC/DC-Wandler
- 34: elektrische Verbraucher
- 36: Sitzbelegungs-Erkennungseinrichtung
- 38: Gurtschloß-Erkennungseinrichtung
- 40: Einklemmschutz
- 41: Positionssensor
- 42: unabhängige Leitung
- 44: Knotenpunkt
- 46: Airbag

## Patentansprüche

1. Fahrzeugdach mit
- einer in einer festen Dachfläche (10) vorgesehenen Dachöffnung (12),
- mindestens einem Verschlußelement (14) zum wahlweisen Verschließen oder wenigstens teilweisen Freigeben der Dachöffnung,
- einem elektrischen Verstellantrieb (18) zum Antreiben des Verschlußelements (14),
- einer Sensorik (24) zum Erfassen einer die Sicherheit der Fahrzeuginsassen beeinträchtigenden Situation und zum Erzeugen eines entsprechenden Gefahrensignals, sowie
- einer mit der Sensorik (24) gekoppelten schnellwirkenden Schließvorrichtung (22), die das Verschlußelement (14) bei Vorliegen eines Gefahrensignals aus dessen Offen- bzw. Teiloffenstellung zu einer Schließbewegung veranlaßt,
dadurch gekennzeichnet, daß
die Schließvorrichtung (22) Mittel zum Erzeugen einer elektrischen Spannung und zum Anlegen derselben an den elektrischen Verstellantrieb (18) aufweist, welche die normale Speisespannung (*Nennspannung*) des Verstellantriebs um ein Mehrfaches übersteigt.

2. Fahrzeugdach nach Anspruch 1, dadurch gekennzeichnet, daß die Mittel zum Erzeugen einer elektrischen Spannung einen mit der Fahrzeugbatterie (20) verbundenen Aufwärts-DC/DC-Wandler (32) umfassen.

3. Fahrzeugdach nach Anspruch 2, dadurch gekennzeichnet, daß eine vom elektrischen Bordnetz des Fahrzeugs unabhängige Leitung (42) vorgesehen ist, die einen Ausgang des Aufwärts-DC/DC-Wandlers (32) mit einem Eingang des Verstellantriebs (18) verbindet.

4. Fahrzeugdach nach Anspruch 1, dadurch gekennzeichnet, daß die Mittel zum Erzeugen einer elektrischen Spannung eine von der Falhrzeugbatterie (20) unabhängige Spannungsquelle umfassen, die eine elektrische Spannung erzeugt, welche die normale Speisespannung des elektrischen Verstellantriebs (18) um ein Mehrfaches übersteigt.

5. Fahrzeugdach nach einem der vorhergehenden Ansprüche, dadurch gekennzeichnet, daß die bei Vorliegen eines Gefahrensignals an den elektrischen Verstellantrieb (18) angelegte Spannung zwischen 100 und 120 V liegt.

6. Fahrzeugdach nach einem der vorhergehenden Ansprüche, dadurch gekennzeichnet, daß ferner eine mit der Schließvorrichtung (22) zusammenwirkende Sitzbelegungs-Erkennungseinrichtung (36) vorgesehen ist.

7. Fahrzeugdach nach einem der vorhergehenden Ansprüche, dadurch gekennzeichnet, daß ferner eine mit der Schließvorrichtung (22) zusammenwirkende Gurtschloß-Erkennungseinrichtung (38) vorgesehen ist.

8. Fahrzeugdach nach einem der vorhergehenden Ansprüche, dadurch gekennzeichnet, daß ferner ein mit der Schließvorrichtung (22) zusammenwirkender Einklemmschutz (40) vorgesehen ist.

9. Fahrzeugdach nach einem der vorhergehenden Ansprüche 1 bis 5, dadurch gekennzeichnet, daß die Schließvorrichtung (22) eine elektronische Schaltung aufweist, welche die Schließbewegung des Verschlußelements in Abhängigkeit von Ausgangssignalen der Sitzbelegungs-Erkennungseinrichtung (36) nach Anspruch 6 und/oder der Gurtschloß-Erkennungseinrichtung (38) nach Anspruch 7 und/oder des Einklemmschutzes (40) nach Anspruch 8 stoppt oder gänzlich verhindert.

10. Fahrzeugdach nach einem der vorhergehenden Ansprüche, dadurch gekennzeichnet, daß das Verschlußelement (14) als ein verschieblicher Himmel ausgeführt ist.

11. Fahrzeugdach nach einem der Ansprüche 1 bis 9, dadurch gekennzeichnet, daß das Verschlußelement (14) als Dachdeckel ausgeführt ist.

12. Fahrzeugdach nach einem der vorhergehenden Ansprüche, dadurch gekennzeichnet, daß ferner ein im Gefahrenfall die Dachöffnung (12) verdeckender Airbag (46) vorgesehen ist.

13. Fahrzeugdach nach einem der vorhergehenden Ansprüche, **dadurch gekennzeichnet**, daß die Schließvorrichtung (22) die Schließbewegung vor dem Erreichen der Endlage des Verschlußelements (14) stoppt.

14. Verfahren zum zumindest teilweisen Verschließen einer in einer festen Dachfläche (10) eines Fahrzeugs vorgesehenen Dachöffnung (12) mittels eines elektrisch antreibbaren Verschlußelements (14), bei welchem
(A) mittels einer am Fahrzeug vorgesehenen Sensorik (24) eine die Sicherheit der Fahrzeuginsassen beeinträchtigende Situation erfaßt wird; und
(B) eine elektrische Spannung erzeugt und an das elektrisch antreibbare Verschlußelement (14) angelegt wird, welche die normale Speisespannung (*Nennspannung*) des elektrischen Verstellantriebs (18) zum Antreiben des Verschlußelements (14) um ein Mehrfaches übersteigt.

15. Verfahren nach Anspruch 14 bei welchem die die normale Speisespannung (*Nennspannung*) des elektrischen Verstellantriebs (18) um ein Mehrfaches übersteigende Spannung mittels eines Aufwärts-DC/DC-Wandlers (32) erzeugt wird, der zwischen der Bordbatterie (20) des Fahrzeugs und dem elektrischen Verstellantrieb (18) angeschlossen ist.

16. Verfahren nach Anspruch 14 bei welchem die die normale Speisespannung (*Nennspannung*) des elektrischen Verstellantriebs (18) um ein Mehrfaches übersteigende Spannung mittels einer von der Bordbatterie (20) des Fahrzeugs unabhängigen Spannungsquelle erzeugt wird.

17. Verfahren nach einem der Ansprüche 14 bis 16, bei welchem während einer Schließbewegung des Verschlußelements (14) die Dachöffnung (12) auf ein mögliches Einklemmen von Gegenständen oder Fahrzeuginsassen überwacht und bei Erkennung einer drohenden Einklemmsituation das Verschlußelement angehalten wird.

18. Verfahren nach einem der Ansprüche 14 bis 17, bei welchem ferner die Belegung der in dem Fahrzeug im Bereich der Dachöffnung (12) vorhandenen Sitze überwacht wird.

19. Verfahren nach einem der Ansprüche 14 bis 18, bei welchem ferner an den sich im Bereich der Dachöffnung (12) befindlichen Sitzen das Geschlossensein von an diesen Sitzen vorgesehenen Sicherheitsgurten überwacht wird.

20. Verfahren nach einem der Ansprüche 14 bis 17, bei welchem die Schließbewegung des Verschlußelements (14) in Abhängigkeit von Ergebnissen der Überwachung der Sitzbelegung nach Anspruch 17 und/oder des Geschlossenseins der Sicherheitsgurte nach Anspruch 18 gestoppt oder gänzlich verhindert wird.
